# EUROPEAN PATENT APPLICATION

(11) **EP 3 653 348 A1**
(43) Date of publication of application: **20.05.2020**
(21) Application number: 19184145.1
(22) Date of filing: 03.07.2019
(51) Int. Cl.: B25J 9/16, B25J 15/00

(54) **SYSTEM AND METHOD FOR INTELLIGENT 3D IMAGING GUIDED ROBOTIC GRIPPER**

(30) Priority: 19.11.2018 IN 201821043487
(71) Applicant: Tata Consultancy Services Limited, Maharashtra (IN)
(72) Inventor: TOMMY, ROBIN, 695581 Kerala (IN); KALHAPURE, SWAPNIL, 695581 Kerala (IN); M, AJITH KUMAR, 695581 Kerala (IN)
(74) Representative: Goddar, Heinz J.

(57) **Abstract**

This disclosure relates generally to a robotic hand system and method for gripping at least one object. The robotic hand system comprises a plurality of modules and these modules are in sync with the robot operating system of the robotic hand system for gripping the object. Further, the robotic hand system is advanced with cognitive capabilities and based on dynamic feeds and imagery inputs through optical instrument, the system is programmed to understand the object and position to hold. Further, the system is configured for how much pressure needs to be applied to grip while holding the object. Moreover, the robotic hand system can be fine-tuned for any object mapping and point cloud.

## Description

### PRIORITY

The present invention claims priority to India Application (Title: system and method for intelligent 3D imaging guided robotic gripper) No. 201821043487, filed in India on November 19, 2018.

### FIELD OF THE INVENTION

The present subject matter described herein, in general, relates to an intelligent 3D imaging, more particularly, systems and methods for gripping objects using 3D imaging based on a stereo camera.

### BACKGROUND

Currently, the concept of automatic robots has penetrated peoples' lives. Whether in production or in life, people want to be more convenient and faster. Robotics is keeping promise of relieving manual efforts and to save their energy from tough and dangerous works. Robotics are improving the quality of life through quality of products. Further, it liberates the aged and infirmed with the dignity by increasing self-sufficiency. A robotic hand is a type of mechanical hand, usually programmable with similar functions as to a human hand. The terminus of the robotic hand are the robotic fingers, as an end effector of the robotic hand, are analogous to the human hand. However, currently available the robotic fingers for gripping are mostly guided and so requires a lot of manual intervention.

Henceforth, there is a need to have a robotic hand with an intelligent gripper which can understand 3D objects and also get navigation accurately to hold the object. The grippers itself can map multiple objects and also understand the required pressure to hold the object.

### SUMMARY OF THE INVENTION

The following presents a simplified summary of some embodiments of the disclosure in order to provide a basic understanding of the embodiments. This summary is not an extensive overview of the embodiments. It is not intended to identify key/critical elements of the embodiments or to delineate the scope of the embodiments. Its sole purpose is to present some embodiments in a simplified form as a prelude to the more detailed description that is presented below.

A robotic hand system and method for gripping at least one object. The robotic hand system comprises a plurality of modules in sync with a processor of the robotic hand system to grip the at least one object based on one or more instructions stored in the memory. Further, the robotic hand system comprises a robotic hand with at least five robotic fingers as an end effector. The robotic hand system is configured for intelligent gripping with cognitive capability and based on dynamic feeds and multiple imagery inputs from one or more optical instruments. The robotic hand system is also configured for analyzing the pressure needs to be applied while gripping the object.

In one embodiment, a robotic hand system configured for gripping at least one object. The robotic hand system comprising a memory storing a plurality of instructions, one or more hardware processors communicatively coupled with the memory, wherein the one or more hardware processors are configured by instructions to execute one or more modules. Further, the robotic hand system comprising a robotic hand comprising at least five robotic fingers, wherein each robotic finger is supported with one or more servo motors, one or more optical instruments configured to capture a plurality of images of the at least one object, wherein the plurality of images are either individual photographs or a sequence of images constituting a video, an analysis module configured to analyze the plurality of captured images to understand grip of the at least one object using a cognitive computing of the robotic hand system, a controlling module configured to control gripping force applied by the robotic hand over the at least one object, a web application providing one or more instructions to train the at least five robotic fingers to grasp the at least one object by individually moving towards the at least one object, at least one web user interface configured to provide interface between the robotic hand with the web application and a web socket configured to provide full duplex communication between the web application and a robot operating system, wherein the robot operating system is used to establish communication between a plurality of nodes of the robotic hand. Further herein, the robotic hand comprises two joints with five robotic fingers as an end effector. The system comprising one or more servo-motors to control a twist joint of each robotic finger as an end effector and a rotational joint of an elbow. It would be appreciated that the captured plurality of images are either stored within one or more of the optical instrument or transmitted to a predefined database of the robotic hand system.

In another embodiment, a method for gripping at least one object using a robotic hand system. The method comprising one or more steps such as capturing a plurality of images of at least one object using one or more optical instruments, analyzing the plurality of captured images to understand grip of the at least one object using a cognitive computing of the robotic hand system, gripping the at least one object with the at least five robotic fingers of the robotic hand by individually moving each robotic finger towards the object using one or more instructions provided by a web application, wherein the web application is interfaced with the robotic hand using a web user interface and controlling a gripping force applied by the robotic hand over the at least one object using a controlling module of the robotic hand system. It is to be noted that the robotic hand comprises two joints with five robotic fingers as an end effector. Further, The system comprising one or more servo-motors to control a twist joint of each robotic finger as an end effector and a rotational joint of an elbow. It would be appreciated that the captured plurality of images are either stored within one or more of the optical instrument or transmitted to a predefined database of the robotic hand system.

It should be appreciated by those skilled in the art that any block diagram herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computing device or processor, whether or not such computing device or processor is explicitly shown.

### BRIEF DESCRIPTION OF THE FIGURES

The embodiments herein will be better understood from the following detailed description with reference to the drawings, in which:
Figure 1 is a block diagram showing the system for gripping at least one object according to an embodiment of the present disclosure; and
Figure 2 is a flow diagram showing a method for gripping at least one object according to an embodiment of the present disclosure.

### DETAILED DESCRIPTION

The embodiments herein and the various features and advantageous details thereof are explained more fully with reference to the nonlimiting embodiments that are illustrated in the accompanying drawings and detailed in the following description. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

Some embodiments of this invention, illustrating all its features, will now be discussed in detail. The words "comprising," "having," "containing," and "including," and other forms thereof, are intended to be equivalent in meaning and be open ended in that an item or commodities following any one of these words is not meant to be an exhaustive listing of such item or commodities, or meant to be limited to only the listed item or commodities.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present invention, the preferred, systems and methods are now described. In the following description for the purpose of explanation and understanding reference has been made to numerous embodiments for which the intent is not to limit the scope of the invention.

One or more components of the invention are described as module for the understanding of the specification. For example, a module may include self-contained component in a hardware circuit comprising of logical gate, semiconductor device, integrated circuits or any other discrete component. The module may also be a part of any software program executed by any hardware entity for example processor. The implementation of module as a software program may include a set of logical instructions to be executed by a processor or any other hardware entity.

The disclosed embodiments are merely exemplary of the invention, which may be embodied in various forms.

The elements illustrated in the Figures interoperate as explained in more detail below. Before setting forth the detailed explanation, however, it is noted that all of the discussion below, regardless of the particular implementation being described, is exemplary in nature, rather than limiting. For example, although selected aspects, features, or components of the implementations are depicted as being stored in memories, all or part of the systems and methods consistent with the attrition warning system and method may be stored on, distributed across, or read from other machine-readable media.

A robotic hand system and method for gripping at least one object using a robotic hand. The robotic hand system comprises a plurality of modules and these modules are in sync with the robot operating system (ROS) of the robotic hand system for gripping the object. Further, the robotic hand system is advanced with cognitive capabilities and based on dynamic feeds and imagery inputs through optical instrument, the system is programmed to understand the object and position to hold. Further, the system is configured for how much pressure needs to be applied to grip while holding the object. It would be appreciated that the robotic hand system can be fine-tuned for any object mapping and point cloud. It is to be noted that the robotic hand is not a prosthetic hand, it is only for handling non-living objects and it can be placed on one or more non-living objects like on an robot or on a table.

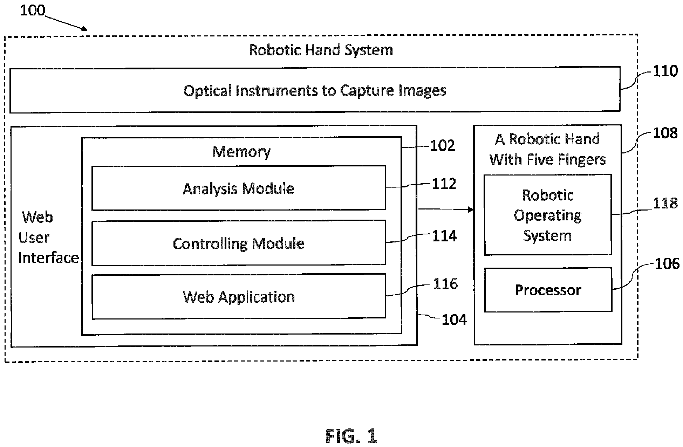

Referring now to the drawings, and more particularly to fig. 1 through fig. 2, where similar reference characters denote corresponding features consistently throughout the figures, there are shown preferred embodiments and these embodiments are described in the context of the following exemplary system and/or method.

According to an embodiment of the disclosure, a robotic hand system (100) for gripping at least one object as shown in fig. 1. The robotic hand system (100) includes a memory (102) with a plurality set of instructions, at least one web user interface (104), and at least one processor (106), wherein the at least one processor is communicatively connected with memory to execute one or more instructions of the memory. Further, the robotic hand system comprising one robotic hand (108) with at least five robotic fingers, one or more optical instruments (110), an analysis module (112), a controlling module (114) and a web application (116) in connection with robot operating system (ROS) (118).

In the preferred embodiment of the disclosure, the robotic hand (108) comprises one or more servo motors to control twist joint of each robotic finger of the at least five robotic fingers. Further, the one or more servo motors are used to control rotational joint of elbow of the robotic hand.

In the preferred embodiment of the disclosure, the robotic hand system (100) comprises one or more optical instruments (110) for capturing a plurality of images of the object. It would be appreciated that the plurality of images are either individual photographs or sequence of images constituting videos. Further, the captured plurality of images are either stored locally within the optical instrument or transmitted to a predefined database of the robotic hand system or both. The optical instrument is a mesh network in the area which provide the live feed from analysis and intelligence. It provides the capability of the robotic hand to have entire area mapped for pick and place. Moreover, the optical instruments communicate each other to dynamically provide movements and the instructional delivery.

In the preferred embodiment of the disclosure, an analysis module (112) of the robotic hand system (100) is configured to analyze the plurality of captured images to understand grip of the object using cognitive computing of the robotic hand system (100). The captured images may also be analyzed for positional mapping of the at least one object.

In the preferred embodiment of the disclosure, the robotic hand system (100) comprising a web application (116) to train the at least five robotic fingers for gripping the at least one object by individually moving towards the at least one object. The web application (116) is interfaced with the robotic hand (108) using a web user interface (104). Further, the web application (116) is connected with a robot operating system (118) using a web socket. The web socket is configured to provide full duplex communication between web application and the robot operating system (118).

In the preferred embodiment of the disclosure, a robot operating system (ROS) (118) is an open source platform which is frequently used for a robotic application. It operates by establishing communication between one or more nodes of the robotic hand system. Each node is a process which performs computation. Each node of the one more nodes can communicate with each other by sending or receiving message of the node.

In the preferred embodiment of the disclosure, a controlling module (114) of the robotic hand system (100) is configured to control gripping force of the robotic hand (108) over the at least one object. It would be appreciated that a two joint robotic hand with the at least five robotic fingers as the end effectors is being used to grip the at least one object. Each robotic finger of the at least five robotic fingers are controlled by using one or more servo motors.

In yet another embodiment of the disclosure, the robotic hand system configured to catch hold of any object that is in front of it and that is done based on its observation of the object. For example, the robotic hand system can differentiate between a plastic and glass cup based on it. Further, it can adjust the pressure with which it needs to hold the object. Moreover, it can identify an object based on the size, color, dimensions, and analyses that to act accordingly.

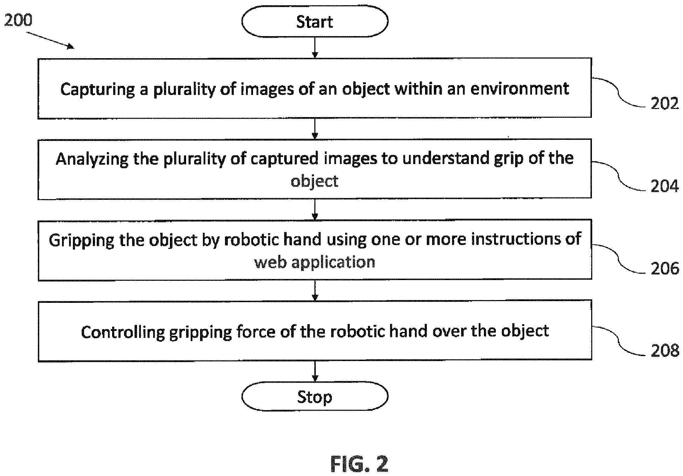

Referring fig 2, which illustrates a flowchart (200) for gripping an object using a robotic hand system (108). The robotic hand system is advanced with cognitive capabilities and based on dynamic feeds and imagery inputs through optical instrument, the system is programmed to understand the object and position to hold. Further, the system is configured for how much pressure needs to be applied to grip while holding the object. It would be appreciated that the robotic hand system can be fine-tuned for any object mapping and point cloud. It is to be noted that the robotic hand is not a prosthetic hand, it is only for handling non-living objects and it can be placed on one or more non-living objects like on an robot or on a table.

Initially at the step (202), a plurality of images of at least one object are captured using one or more optical instruments (110). It would be appreciated that the plurality of images are either individual photographs or sequence of images constituting videos. Further, the captured plurality of images are either stored locally within the optical instrument or transmitted to a predefined database of the robotic hand system or both. The optical instrument is a mesh network in the area which provide the live feed from analysis and intelligence. It provides the capability of the robotic hand to have entire area mapped for pick and place. Moreover, the optical instruments communicate each other to dynamically provide movements and the instructional delivery.

At the step (204), the plurality of captured images are analyzed to understand grip of the object using an analysis module (112) and cognitive computing of robotic hand system (100). Further, the captured images may also be analyzed for positional mapping of the at least one object.

At the step (206), where the robotic hand grips the at least one object using one or more instructions of web application (116). The robotic hand system (100) comprising a web application (116) to train the at least five robotic fingers for gripping the at least one object by individually moving towards the at least one object. The web application (116) is interfaced with the robotic hand (108) using a web user interface (104). Further, the web application (116) is connected with a robot operating system (118) using a web socket. The web socket is configured to provide full duplex communication between web application and the robot operating system (118).

At the last step (208), where the process controls gripping force of the robotic hand (108) over the at least one object using a controlling module (114) of the robotic hand system (100). It would be appreciated that a two joint robotic hand with the at least five robotic fingers as the end effectors is being used to grip the at least one object. Each robotic finger of the at least five robotic fingers are controlled by using one or more servo motors.

The embodiments of present disclosure herein addresses unresolved problem of manual intervention while gripping an object. The embodiments, thus provides a robotic hand system and method for gripping at least one object. The intelligent gripper would be able to understand 3D objects and also get navigated to the instance with more accuracy. The gripper would be able to map multiple objects and also apply the required pressure to hold the object. The entire robotic hand system works on the 3D maps and would be able to completely understand the requirements based on the one or more inputs. This would be really helpful in production lines whenever there is a tool or devices requirements to be fulfilled on a dynamic basis. Moreover, the embodiments herein provides an intelligent robotic hand system that would keep in track of the end to path mapping with the 3D imagery.

It is, however to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output (I/O) devices (including but not limited to keyboards, displays, pointing devices, etc.) can be coupled to the system either directly or through intervening I/O controllers. Network adapters may also be coupled to the system to enable the data processing system to become coupled to other data processing systems or remote printers or storage devices through intervening private or public networks. Modems, cable modem and Ethernet cards are just a few of the currently available types of network adapters.

A representative hardware environment for practicing the embodiments may include a hardware configuration of an information handling/computer system in accordance with the embodiments herein. The system herein comprises at least one processor or central processing unit (CPU). The CPUs are interconnected via system bus to various devices such as a random access memory (RAM), read-only memory (ROM), and an input/output (I/O) adapter. The I/O adapter can connect to peripheral devices, such as disk units and tape drives, or other program storage devices that are readable by the system. The system can read the inventive instructions on the program storage devices and follow these instructions to execute the methodology of the embodiments herein.

The system further includes a user interface adapter that connects a keyboard, mouse, speaker, microphone, and/or other user interface devices such as a touch screen device (not shown) to the bus to gather user input. Additionally, a communication adapter connects the bus to a data processing network, and a display adapter connects the bus to a display device which may be embodied as an output device such as a monitor, printer, or transmitter, for example.

The preceding description has been presented with reference to various embodiments. Persons having ordinary skill in the art and technology to which this application pertains will appreciate that alterations and changes in the described structures and methods of operation can be practiced without meaningfully departing from the principle, spirit and scope.

## Claims

1. A robotic hand system configured for gripping at least one object,
wherein the robotic hand system comprising:
a robotic hand comprising at least five robotic fingers, wherein each robotic finger is connected with one or more servo motors;
one or more optical instruments configured to capture a plurality of images of the at least one object, wherein the plurality of images are either individual photographs or a sequence of images constituting a video;
a memory storing a plurality of instructions;
one or more hardware processors communicatively coupled with the memory, wherein the one or more hardware processors having one or more modules;
an analysis module configured to analyze the plurality of captured images to understand grip of the at least one object using a cognitive computing of the robotic hand system;
a controlling module configured to control a gripping force applied by the robotic hand over the at least one object; and
a web application providing one or more instructions to train each of the five robotic fingers to grasp the at least one object by individually moving towards the at least one object;
at least one web user interface configured to provide interface between the robotic hand with the web application; and
a web socket configured to provide full duplex communication between the web application and a robot operating system of the robotic hand system.

2. The system of claim 1, wherein the robotic hand comprises two joints with five robotic fingers as an end effector.

3. The system of claim 1, wherein the robotic hand comprising one or more servo-motors to control a twist joint of each robotic finger as an end effector and a rotational joint of an elbow.

4. The system of claim 1, wherein the captured plurality of images are either stored within one or more of the optical instrument or transmitted to a predefined database of the robotic hand system.

5. The system of claim 1, wherein the robot operating system is used to establish communication between the application and one or more nodes of the robotic hand.

6. A method for gripping at least one object using a robotic hand system, wherein the method comprising one or more steps of:
capturing a plurality of images of at least one object using one or more optical instruments;
analyzing the plurality of captured images to understand grip of the at least one object using a cognitive computing of the robotic hand system;
gripping the at least one object with the at least five robotic fingers of the robotic hand by individually moving each robotic finger towards the object using one or more instructions provided by a web application, wherein the web application is interfaced with the robotic hand using a web user interface; and
controlling a gripping force applied by the robotic hand over the at least one object using a controlling module of the robotic hand system.

7. The method of claim 6, wherein the robotic hand comprises two joint with at least five robotic fingers as an end effector.

8. The method of claim 6, wherein the movement of the at least five robotic fingers is based on an image processing.

9. The method of claim 6, wherein the captured plurality of images are either stored locally within the optical instrument or transmitted to a predefined database.

10. A non-transitory computer readable medium storing one or more instructions which when executed by a processor on a system, cause the processor to perform method for gripping at least one object using a robotic hand system comprising:
capturing a plurality of images of at least one object using one or more optical instruments;
analyzing the plurality of captured images to understand grip of the at least one object using a cognitive computing of the robotic hand system;
gripping the at least one object with the at least five robotic fingers of the robotic hand by individually moving each robotic finger towards the object using one or more instructions provided by a web application, wherein the web application is interfaced with the robotic hand using a web user interface; and
controlling a gripping force applied by the robotic hand over the at least one object using a controlling module of the robotic hand system.
